# EUROPÄISCHE PATENTSCHRIFT

(11) **EP 2 794 470 B1**
(45) Veröffentlichungstag und Bekanntmachung des Hinweises auf die Patenterteilung: **06.03.2019**
(21) Anmeldenummer: 12799062.0
(22) Anmeldetag: 30.11.2012
(51) Int. Cl.: C01B 21/28, C01B 21/26, F01K 23/06, F02C 6/10

(54) **VERFAHREN UND VORRICHTUNG ZUR HERSTELLUNG VON SALPETERSÄURE**
PROCESS AND APPARATUS FOR PREPARATION OF NITRIC ACID
PROCEDE ET DISPOSITIF DE PRODUCTION D'ACIDE NITRIQUE

(30) Priorität: 22.12.2011 DE 102011122142
(43) Veröffentlichungstag der Anmeldung: 29.10.2014
(73) Patentinhaber: thyssenkrupp Industrial Solutions AG, 45143 Essen (DE)
(72) Erfinder: BIRKE, Daniel, 49326 Melle (DE)
(74) Vertreter: thyssenkrupp Intellectual Property GmbH
(86) Internationale Anmeldenummer: PCT/EP2012/004948
(87) Internationale Veröffentlichungsnummer: WO 2013/091770

(56) Entgegenhaltungen:
- DE-A1- 10 211 964
- US-A- 3 715 887
- US-A- 4 869 890

## Beschreibung

Die vorliegende Erfindung betrifft ein Verfahren zur Herstellung von Salpetersäure, im Rahmen dessen beim An- und Abfahren der Anlage eine ausgewählte Steuerung der Restgasturbine zum Einsatz gelangt. Die Erfindung betrifft auch eine entsprechend modifizierte Anlage zur Herstellung von Salpetersäure. Das erfindungsgemäße Verfahren bzw. die erfindungsgemäße Anlage gestatten ein problemloses An- und Abfahren von Salpetersäureanlagen, auch von solchen Anlagen, die mit Hochleistungs-Restgasexpandern ausgestattet sind.

Salpetersäure ist ein wichtiger Grundstoff der chemischen Industrie und dient beispielsweise als Grundlage zur Herstellung von Düngemittel, Explosivstoffen, sowie zur Nitrierung von organischen Stoffen bei der Herstellung von Farbstoffen und Desinfektionsmitteln.

Seit Anfang des 20. Jahrhunderts wird Salpetersäure nach dem sogenannten Ostwaldverfahren hergestellt, auf dem bis heute die industrielle Herstellung im Großmaßstab beruht. Bei dieser Reaktion handelt es sich um eine katalytische Reaktion von Ammoniak. Das entstehende Stickstoffmonoxid reagiert zu Stickstoffdioxid, aus dem durch Reaktion mit Wasser Salpetersäure entsteht, die in Rieseltürmen abgetrennt werden kann. Dieser Prozess ist in der Publikation "Anorganische Stickstoffverbindungen" von Mundo/Weber, Carl Hanser Verlag München Wien 1982, sowie in WO 01/68520 A1 beschrieben.

Zur Herstellung von Salpetersäure wird allgemein zunächst Ammoniak NH₃ mit Luft reaktiv umgesetzt und Stickoxid NO erzeugt, welches dann zu Stickstoffdioxid NO₂ aufoxidiert wird.

Anschließend wird das so gewonnene Stickstoffdioxid NO₂ in Wasser absorbiert und es entsteht die Salpetersäure. Damit möglichst viel von dem gewonnenen Stickstoffdioxid NO₂ von Wasser absorbiert wird, geschieht die Absorption in der Regel bei erhöhtem Druck, vorzugsweise bei Drucken zwischen 4 bis 14 bar.

Der für die Umsetzung des als Rohstoff eingesetzten Ammoniaks benötigte Sauerstoff wird in der Regel in Form von Luftsauerstoff zugeführt. Zum Zwecke der Zuführung wird die Prozessluft in einem Kompressor verdichtet und auf einen Druck gebracht, der sowohl der Oxidationsreaktion wie auch der Absorptionsreaktion angepasst ist.

Üblicherweise wird die Energie zur Kompression der Luft einerseits mittels Entspannung in einem Restgasexpander des aus der Absorption austretenden Restgases auf Umgebungsdruck und andererseits durch die Verwertung der bei den Umsetzungen freigesetzten Wärmen gewonnen. Die in verschiedenen Ausführungen errichteten Salpetersäureanlagen sind an die jeweiligen speziellen Anforderungen ihres jeweiligen Standortes angepasst.

Eindruckverfahren kommen insbesondere dann zum Einsatz wenn die geforderte Tagesproduktion gering ist. In diesen Fällen wird die Salpetersäureanlage vorzugsweise nach dem MonoHochdruck-Verfahren oder nach dem Mono Mitteldruck Verfahren betrieben. Beim Mono Hochdruck Verfahren erfolgen die Verbrennung des Ammoniaks und die Absorption der Stickstoffoxide bei etwa gleichem Druck von > 8 bar. Der Vorteil des Mono Hochdruck-Verfahrens liegt darin, dass eine kompakte Bauweise gewährleistet wird.

Beim Mono Mitteldruck-Verfahren erfolgen die Verbrennung des Ammoniaks und die Absorption der Stickstoffoxide bei etwa gleichem Druck von < 8 bar. Der Vorteil des Mono Mitteldruck-Verfahrens liegt darin, dass eine optimale Verbrennungsausbeute gewährleistet wird.

Sind hingegen große Nenn-Kapazitäten und/oder höhere Säurekonzentrationen gefordert, so stellt eine nach dem Zweidruckverfahren ausgeführte Salpetersäureanlage die wirtschaftlichere Lösung dar. Beim Zweidruckverfahren geschieht die Verbrennung des eingesetzten Ammoniaks bei einem ersten Druck, nämlich bei einem - verglichen mit dem Absorptionsdruck - niedrigerem Druck. Die bei der Verbrennung gebildeten, nitrosen Gase, auch Nitrosegas genannt, werden allgemein nach der Kühlung mittels Nitrosegasverdichtung auf den zweiten Druck, den Absorptionsdruck gebracht.

Der Vorteil des Zweidruck-Verfahrens liegt darin, dass die Druckstufen den jeweiligen Reaktionen angepasst sind und somit sowohl eine optimale Verbrennungsausbeute als auch eine kompakte Absorption gewährleist wird.

Allgemein umfassen die Anlagen zur Durchführung der vorstehend diskutierten Verfahren mindestens einen Luftverdichter sowie mindestens eine Expansionsturbine für das Restgas (auch "Restgasturbine" genannt) und mindestens einen Antrieb, welcher der verwendeten Maschine die benötigte Ausgleichsenergie für ihren Betrieb zur Verfügung stellt, z.B. eine Dampfturbine oder einen Elektromotor.

Solche Anlagen sind beispielsweise aus der WO 2009/146785 A1 und der WO 2011/054928 A1 bekannt. Aus der US 3,715,887 A ist eine Anlage bekannt, in der eine dreistufige Restgasturbine zum Einsatz kommt.

Im Gegensatz zum stationären Betrieb arbeiten beim An- und Abfahrprozess von Salpetersäureanlagen die vorhandenen Aggregate nicht unter Normalbedingungen und erfordern häufig eine zusätzliche Regelung.

Beim Anfahren aus dem abgeschalteten/kalten Zustand wird in der Regel zunächst die Salpetersäureanlage unter dem Import von Fremdenergie (z.B.Fremddampf und/oder Strom) mit Luft gefüllt ("Luftbetrieb"). Erste Emissionen von NOₓ entstehen, sobald der Absorptionsturm während des Anfahrprozesses mit Salpetersäure aus einem Vorlagebehälter gefüllt wird und das in der Säure enthaltene NO₂-Gas durch die Luft ausgeblasen wird, wobei in heutigen Anlagen das während des Füllvorgangs entstehende NOₓ emittiert wird. Mit dem Beenden des Füllvorgangs erlischt dann auch zunächst die NOₓ-Emission bis die NH₃-Oxidation der Salpetersäureanlage gestartet ("gezündet") wird. Nach dem Zünden steigen Temperatur und NOₓ-Konzentration in der Anlage stetig auf den stationären Betriebswert und die einzelnen Anlagenteile können ab einem bestimmten Zeitpunkt planmäßig betrieben werden.

Beim Abfahren der Salptersäureanlage wird zunächst die NH₃-Oxidation gestoppt. Die NOₓ-Konzentration am Ausgang des Absorptionsturmes nimmt stetig ab und parallel dazu fällt die Temperatur. Auch hier können ab einem gewissen Zeitpunkt einzelne Anlagenteile nicht mehr planmäßig betrieben werden, da die stationären Betriebswerte nicht mehr einzuhalten sind.

Aus US 4,869,890 A und US 4,330,520 A ist eine Anlage zur Herstellung von Salpetersäure aus Ammoniak und sauerstoffhaltigem Gas bekannt, welche einen Luftverdichter, eine Restgasturbine, einen Kamin sowie eine vor der Restgasturbine angeordnete Bypassleitung aufweist, durch die der Restgasstrom direkt in den Kamin eingeleitet werden kann.

DE 102 11 964 A1 offenbart eine Anlage zur Herstellung von Salpetersäure aus Ammoniak und sauerstoffhaltigem Gas, welche einen Luftverdichter, eine Restgasturbine sowie eine vor der Restgasturbine angeordnete Bypass- bzw. Nebenleitung aufweist, durch die mindestens ein Teilstrom direkt in eine Abgasleitung geleitet werden kann.

Aus GB 807,885 A ist eine Anlage zur Herstellung von Salptersäure aus Ammoniak und sauerstoffhaltigem Gas unter Druck bekannt, welche einen Luftverdichter, eine Restgasturbine sowie eine vor der Restgasturbine angeordnete Bypassleitung aufweist, durch die mindestens ein Teilstrom direkt einem Kamin zugeleitet werden kann. Dieses Dokument beschreibt darüber hinaus, dass während des Anfahrens oder des Betriebs der Salpetersäureanlage vor der Restgasturbine ein Teilstrom des der Restgasturbine zugeführten Mediums entnommen und einem Kamin zugeführt wird.

Beim Betrieb der Salpetersäureanlage ist es wünschenswert, einen hohen Wirkungsgrad der Restgasturbine zu erreichen, um die Betriebskosten zu senken. Dazu muss die Eintrittstemperatur des Mediums, welches die Restgasturbine durchströmt, während des Anfahr- oder Abfahrvorgangs der Anlage so hoch sein, dass die aus der Restgasturbine austretenden Gase nicht gefrieren. Insbesondere bei Restgasturbinen mit hohem Wirkungsgrad besteht eine verstärkte Gefahr des Einfrierens, denn eine Restgasturbine mit verbessertem Wirkungsgrad kühlt im Gegensatz zu einer herkömmlichen Restgasturbine das sie durchströmende Medium bei gleicher Eintrittstemperatur wesentlich stärker ab. Allerdings ist es nicht immer möglich das Medium, dass die Restgasturbine durchströmt, beim Anfahren und/oder beim Abfahren auf die erforderliche Temperatur zu erhitzen.

Im Gegensatz zum Normalbetrieb der Anlage ist die Eintrittstemperatur des die Restgasturbine durchströmenden Mediums während des Anfahrens und/oder Abfahrens meistens geringer.

Daher wird der Wirkungsgrad der Restgasturbine durch das sie durchströmende Medium beim Anfahren und/oder Abfahren begrenzt, um das Einfrieren der Restgasturbine während des Anfahrens und / oder Abfahrens zu vermeiden.

Eine Aufgabe der vorliegenden Erfindung besteht darin, die bekannten Eindruck- und Zweidruckverfahren zur Herstellung von Salpetersäure dahingehend zu optimieren, dass die oben dargelegten Probleme beim An- oder Abfahren dieser Anlagen vermieden werden können. Ferner besteht eine Aufgabe der Erfindung darin, Anlagen zur Durchführung derartiger Verfahren zur Verfügung zu stellen und einen Einsatz von Restgasturbinen mit höherem Wirkungsgrad zu ermöglichen um dadurch die Betriebskosten zu senken.

Eine weitere Aufgabe der vorliegenden Erfindung ist es, dass beim Einsatz eines herkömmlichen Expanders ein farbloses Anfahren von Salpetersäureanlagen ermöglicht werden kann, da das Restgas soweit erhitzt wird, so dass die Restgasreinigung frühzeitig in Betrieb genommen werden kann.

Die Erfindung betrifft ein Verfahren zur Herstellung von Salpetersäure aus Ammoniak und sauerstoffhaltigem Gas nach dem Eindruck- oder Zweidruckverfahren, bei dem die Oxidation des eingesetzten Ammoniaks mittels verdichteter Prozessluft, die in mindestens einem Verdichter verdichtet wurde, an einem Katalysator geschieht, und das durch die Oxidation gebildete Nitrosegas mindestens teilweise von Wasser absorbiert wird, wodurch Salpetersäure entsteht, und das nicht absorbierte Restgas zwecks Gewinnung von Verdichterarbeit in mindestens einer mehrstufigen Restgasturbine (1) expandiert wird, dadurch gekennzeichnet, dass zumindest während des Anfahrens und/oder des Abfahrens der Salpetersäureanlage in der mehrstufigen Restgasturbine (1) ein Teilstrom (3) des die mehrstufige Restgasturbine (1) durchströmenden Mediums (4) entnommen wird und dass gegebenenfalls vor der mehrstufigen Restgasturbine (1) ein Teilstrom (2) des der mehrstufigen Restgasturbine (1) zugeführten Mediums (4a) entnommen wird und dass das entnommene Medium einem Kamin (5) zugeführt wird, wobei die Entnahme des Teilstroms (3) zwischen zwei oder mehreren Restgasturbinenstufen stattfindet.

Im erfindungsgemäßen Verfahren wird der mehrstufigen Restgasturbine (1) ein Teilstrom (3) des diese durchströmenden Mediums (4) entnommen und auf der Austrittsseite der Restgasturbine (1) dem Kamin (5) zugeführt. Dabei findet die Entnahme des Teilstroms (3) zwischen zwei oder mehreren Restgasturbinenstufen statt.

Der Aufbau der erfindungsgemäß eingesetzten Restgasturbine (1) entspricht von der Grundidee einer Dampfturbine mit Extraktion, einer sogenannten Extraktionsturbine.

Während der Entnahme des Teilstroms (3) wird bei der mehrstufigen Restgasturbine (1) der Wirkungsgrad der auf die Entnahme folgenden Restgasexpanderstufen durch die geringere Durchströmung herabgesetzt. Die Entnahmemenge kann durch eine Entnahmevorrichtung (6), beispielsweise durch ein Hand- und oder Regelventil gesteuert werden; es bietet sich aber auch eine automatisierte Steuerung der Entnahmemenge an, beispielsweise über ein computergesteuertes Ventil.

Weiterhin kann die Restgastemperatur im Austritt der Restgasturbine (1) und oder im Kamin (5) mit den Maßnahmen des erfindungsgemäßen Verfahrens auf eine gewünschte Temperatur eingestellt werden.

In einer weiteren Variante des erfindungsgemäßen Verfahrens wird vor der mehrstufigen Restgasturbine (1) durch einen Restgasturbinenbypass (2) die Menge des Mediums (4a), das der Restgasturbine (1) zugeführt wird ebenfalls reduziert und in den Kamin (5) geleitet.

Dies hat ebenfalls zur Folge, dass sich durch den reduzierten Durchfluss durch die mehrstufige Restgasturbine (1) der Wirkungsgrad verringert bzw. eine verringerte Expansion in der mehrstufigen Restgastubine (1) stattfindet, wodurch die Austrittstemperatur des Mediums aus der Turbine erhöht wird. Dies vermeidet ebenfalls die Gefahr des Einfrierens der mehrstufigen Restgasturbine (1).

Die Betriebsweise der Salpetersäureanlage gemäß der Erfindung erfolgt hauptsächlich in der Anfahr- und/oder Abfahrphase der Anlage. Aber auch während des stationären Betriebs können die Maßnahmen des erfindungsgemäßen Verfahrens dazu herangezogen werden, um die Betriebsparameter in der Anlage zu regeln.

Durch das erfindungsgemäße Verfahren wird Salpetersäure mit einer Konzentration im Bereich von 40 bis 76 % aus Ammoniak und sauerstoffhaltigem Gas nach dem Eindruck- oder Zweidruckverfahren hergestellt, bei dem die Verbrennung des eingesetzten Ammoniaks mittels verdichteter Prozessluft, die in mindestens einem Verdichter verdichtet wurde, geschieht.

Das durch die Oxidation gebildete Nitrosegas wird mindestens teilweise von Wasser absorbiert, wodurch Salpetersäure entsteht. Das nicht absorbierte Restgas wird zwecks Rückgewinnung von Verdichtungsarbeit in einem oder auch mehreren Restgasturbinen, auch Gasexpander genannt, bevorzugt auf Umgebungsdruck, expandiert.

Als sauerstoffhaltiges Gas wird häufig Luft eingesetzt, es kann jedoch auch von Vorteil sein, mit Sauerstoff angereicherte Luft einzusetzen.

Die Erfindung betrifft ein Verfahren, das in einer Anlage durchgeführt wird, die mindestens eine Restgasturbine (1) mit mindestens zwei Stufen umfasst.

Die Erfindung betrifft insbesondere ein Verfahren, bei dem ein Teil des zur Durchströmung der mehrstufigen Restgasturbine (1) vorgesehenen Mediums (4a) als Teilstrom (2) durch einen Bypass vor der mehrstufigen Restgasturbine (1) abgezweigt und durch den Bypass in den Kamin (5) abgeführt wird.

Die Erfindung betrifft insbesondere ein Verfahren, bei dem eine mehrstufige Restgasturbine (1) eingesetzt wird, ein Teil des die Restgasturbine (1) durchströmenden Mediums (4) nach dem Austritt aus einer Turbinenstufe als Teilstrom (3) vor der darauf folgenden Turbinenstufe durch einen Bypass abgezweigt wird und durch den Bypass in den Kamin (5) abgeführt wird.

In einer besonders bevorzugten Ausführungsform des erfindungsgemäßen Verfahrens dient dabei die Temperatur des die mehrstufige Restgasturbine verlassenden Mediums (4b) als Stellgröße für eine Regeleinrichtung (6), vorzugsweise ein Ventil, um die Menge des als Teilstrom (2, 3) durch den Bypass abgeführten Anteils des Mediums einzustellen.

Die Erfindung betrifft insbesondere ein Verfahren, das in einer Anlage durchgeführt wird, die mindestens eine Absorptionseinrichtung zur Absorption von Nitrosegas in Wasser umfasst.

Gegenstand der Erfindung ist ferner eine Vorrichtung zur Durchführung eines Verfahrens wie oben beschrieben.

Diese Vorrichtung enthält einen Antrieb, der der verwendeten Maschine die benötigte Ausgleichsenergie für ihren Betrieb zur Verfügung stellt, z.B. eine Dampfturbine oder einen Elektromotor, mindestens einen Luftverdichter, mindestens eine mehrstufige Restgasturbine (1) und mindestens einen Kamin (5), sowie mindestens eine Bypassleitung angeordnet in der mehrstufigen Restgasturbine (1) zur Entnahme mindestens eines Teilstroms (3) des die mehrstufige Restgasturbine (1) durchströmenden Mediums (4) zwischen zwei oder mehreren Restgasturbinenstufen und gegebenenfalls vor der mehrstufigen Restgasturbine (1) zur Entnahme mindestens eines Teilstroms (2) des der mehrstufigen Restgasturbine (1) zugeführten Mediums (4a) und zur Einleitung des Teilstromes (2, 3) in den Kamin (5).

Mit Hilfe des erfindungsgemäßen Verfahrens lassen sich Anlagen zur Herstellung von Salpetersäure rasch und materialschonend an- und abfahren, ohne dass ein Risiko des Einfrierens der Restgasturbine(n) (1) besteht. Insbesondere beim Einsatz von Restgasturbinen (1) mit hohem Wirkungsgrad bietet das erfindungsgemäße Verfahren ein hohes Ausmaß an Betriebssicherheit, da ein Einfrieren der Restgasturbine (1) sicher vermieden werden kann.

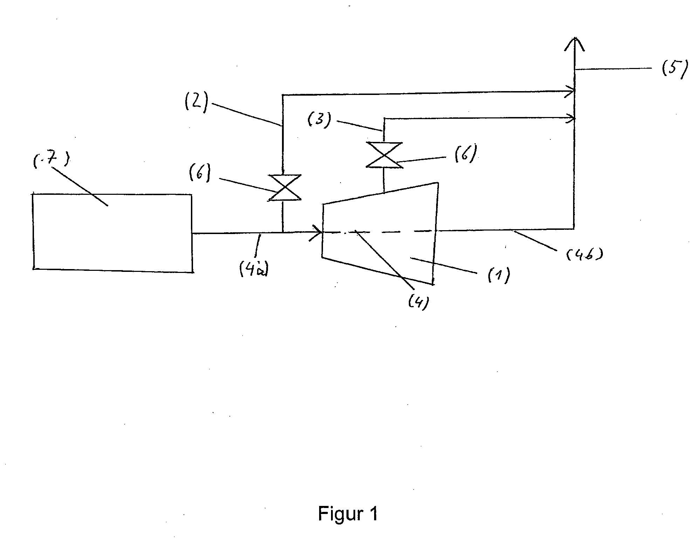

Figur 1 beschreibt eine Variante des erfindungsgemäßen Verfahrens bzw. eine Variante eines Teils der erfindungsgemäßen Vorrichtung schematisch.

Dargestellt ist eine nicht im Detail ausgeführte Salpetersäure-Teilanlage (7), die in eine mehrstufige Restgasturbine (1) mündet. Ein Teilstrom (2, 3) des die mehrstufige Restgasturbine (1) durchströmenden Mediums (4) bzw. der der mehrstufigen Restgasturbine zugeführten Mediums (4a) wird vor und in der Restgasturbine (1) mittels von Bypässen entnommen und wird dem Kamin (5) zugeführt. Die Entnahmemenge kann durch ein Ventil (6) geregelt werden. Das die mehrstufige Restgasturbine verlassende Medium (4b) wird ebenfalls dem Kamin (5) zugeführt.

## Patentansprüche

1. Verfahren zur Herstellung von Salpetersäure aus Ammoniak und sauerstoffhaltigem Gas nach dem Eindruck- oder Zweidruckverfahren, bei dem die Oxidation des eingesetzten Ammoniaks mittels verdichteter Prozessluft, die in mindestens einem Verdichter verdichtet wurde, an einem Katalysator geschieht, und das durch die Oxidation gebildete Nitrosegas mindestens teilweise von Wasser absorbiert wird, wodurch Salpetersäure entsteht, und das nicht absorbierte Restgas zwecks Gewinnung von Verdichterarbeit in mindestens einer mehrstufigen Restgasturbine (1) expandiert wird, **dadurch gekennzeichnet, dass** zumindest während des Anfahrens und/oder des Abfahrens der Salpetersäureanlage in der mehrstufigen Restgasturbine (1) ein Teilstrom (3) des die mehrstufige Restgasturbine (1) durchströmenden Mediums (4) entnommen wird, und dass das entnommene Medium einem Kamin (5) zugeführt wird, wobei die Entnahme des Teilstroms (3) zwischen zwei oder mehreren Restgasturbinenstufen stattfindet.

2. Verfahren nach Anspruch 1, **dadurch gekennzeichnet, dass** vor der mehrstufigen Restgasturbine (1) ein Teilstrom (2) des der mehrstufigen Restgasturbine (1) zugeführten Mediums (4a) entnommen wird und dass das entnommene Medium einem Kamin (5) zugeführt wird.

3. Verfahren nach Anspruch 1, **dadurch gekennzeichnet, dass** der mehrstufigen Restgasturbine (1) ein Teilstrom (3) des diese durchströmenden Mediums (4) entnommen wird und auf der Austrittsseite der Restgasturbine (1) dem Kamin (5) zugeführt wird.

4. Verfahren nach Anspruch 1, **dadurch gekennzeichnet, dass** ein Teil des die mehrstufige Restgasturbine (1) durchströmenden Mediums (4) nach dem Austritt aus einer Turbinenstufe als Teilstrom (3) vor der darauf folgenden Turbinenstufe durch einen Bypass abgezweigt wird und durch den Bypass in den Kamin (5) abgeführt wird,

5. Verfahren nach einem der Ansprüche 1 bis 4, **dadurch gekennzeichnet, dass** die Entnahmemenge des Teilstroms (2, 3) durch eine Entnahmevorrichtung (6), vorzugsweise durch ein Hand- und oder Regelventil gesteuert wird,

6. Verfahren nach einem der Ansprüche 1 bis 5, **dadurch gekennzeichnet, dass** durch die Entnahmemenge des Teilstroms (2, 3) die Restgastemperatur im Austritt der Restgasturbine und/oder im Kamin (5) auf eine gewünschte Temperatur eingestellt wird.

7. Verfahren nach Anspruch 1, **dadurch gekennzeichnet, dass** während des Anfahrens und/oder des Abfahrens der Salpetersäureanlage in der mehrstufigen Restgasturbine (1) ein Teilstrom (3) des die mehrstufige Restgasturbine (1) durchströmenden Mediums (4) entnommen wird und dass vor der Restgasturbine (1) ein Teilstrom (2) des der Restgasturbine (1) zugeführten Mediums (4a) entnommen wird und dass das entnommene Medium einem Kamin (5) zugeführt wird.

8. Verfahren nach Anspruch 1, **dadurch gekennzeichnet, dass** bei dem Verfahren ein Teil des zur Durchströmung der mehrstufigen Restgasturbine (1) vorgesehenen Mediums (4a) durch einen Bypass vor der mehrstufigen Restgasturbine (1) abgezweigt wird und durch den Bypass in den Kamin (5) abgeführt wird.

9. Verfahren nach einem der Ansprüche 1 bis 8, **dadurch gekennzeichnet, dass** die Temperatur des die mehrstufige Restgasturbine (1) verlassenden Mediums (4b) als Stellgröße für eine Entnahmeeinrichtung (6) dient, um die Menge des als Teilstrom (2, 3) durch den Bypass abgeführten Anteils des Mediums (4) einzustellen.

10. Verfahren nach Anspruch 1, **dadurch gekennzeichnet, dass** das Verfahren in einer Anlage durchgeführt wird, die mindestens eine Absorptionseinrichtung zur Absorption von Nitrosegas in Wasser umfasst.

11. Vorrichtung zum Betrieb des Verfahrens nach Anspruch 1 enthaltend mindestens einen Luftverdichter, mindestens eine mehrstufige Restgasturbine (1) und mindestens einen Kamin (5), sowie mindestens eine Bypassleitung angeordnet in der mehrstufigen Restgasturbine (1) zur Entnahme mindestens eines Teilstroms (3) des die Restgasturbine (1) durchströmenden Mediums (4) zwischen zwei oder mehreren Restgasturbinenstufen und zur Einleitung des Teilstromes (3) in den Kamin (5).

12. Vorrichtung nach Anspruch 11, **dadurch gekennzeichnet, dass** mindestens eine Bypassleitung vorgesehen ist, die vor der mehrstufigen Restgasturbine (1) angeordnet ist und die zur Entnahme mindestens eines Teilstroms (2) des der mehrstufigen Restgasturbine (1) zugeführten Mediums (4a) und zur Einleitung des Teilstromes (2, 3) in den Kamin (5) dient.

13. Vorrichtung nach einem der Ansprüche 11 bis 12, **dadurch gekennzeichnet, dass** in der Bypassleitung mindestens eine Entnahmeeinrichtung (6) vorgesehen ist, mit dem die Menge des Teilstroms (2, 3) eingestellt werden kann.

## Claims

1. Process for preparing nitric acid from ammonia and oxygenous gas by the single pressure or dual pressure process, in which the oxidation of the ammonia used is accomplished by means of compressed process air which has been compressed in at least one compressor over a catalyst, and the nitrous gas formed by the oxidation is at least partly absorbed by water, forming nitric acid, and the unabsorbed residual gas is expanded for the purpose of recovering compressor work in at least one residual gas turbine (1), **characterized in that**, at least during the startup and/or the shutdown of the nitric acid plant, a substream (3) of the medium (4) flowing through the multistage residual gas turbine (1) is withdrawn in the multistage residual gas turbine (1) and **in that** the medium withdrawn is supplied to a chimney (5), the withdrawal of the substream (3) taking place between two or more residual gas turbine stages.

2. Process according to Claim 1, **characterized in that** a substream (2) of the medium (4a) supplied to the multistage residual gas turbine (1) is withdrawn upstream of the multistage residual gas turbine (1) and **in that** the medium withdrawn is supplied to a chimney (5).

3. Process according to Claim 1, **characterized in that** a substream (3) of the medium (4) flowing through the multistage residual gas turbine (1) is withdrawn therefrom and supplied to the chimney (5) on the exit side of the residual gas turbine (1).

4. Process according to Claim 1, **characterized in that** a portion of the medium (4) flowing through the multistage residual gas turbine (1), after leaving a turbine stage, is branched off as substream (3) by a bypass before the downstream turbine stage and removed through the bypass into the chimney (5).

5. Process according to one of Claims 1 to 4, **characterized in that** the withdrawal rate of the substream (2, 3) is controlled by a withdrawal device (6), preferably by a manual valve and/or regulating valve.

6. Process according to one of Claims 1 to 5, **characterized in that** the withdrawal rate of the substream (2, 3) is used to set the residual gas temperature in the exit from the residual gas turbine and/or in the chimney (5) to a desired temperature.

7. Process according to Claim 1, **characterized in that**, during the startup and/or shutdown of the nitric acid plant, a substream (3) of the medium (4) flowing through the multistage residual gas turbine (1) is withdrawn in the multistage residual gas turbine (1) and **in that** a substream (2) of the medium (4a) supplied to the residual gas turbine (1) is withdrawn upstream of the residual gas turbine (1) and **in that** the medium withdrawn is supplied to a chimney (5).

8. Process according to Claim 1, **characterized in that** a portion of the medium (4a) provided for flow through the multistage residual gas turbine (1) is branched off by a bypass upstream of the multistage residual gas turbine (1) and removed through the bypass into the chimney (5).

9. Process according to one of Claims 1 to 8, **characterized in that** the temperature of the medium (4b) leaving the multistage residual gas turbine (1) serves as a control parameter for a withdrawal device (6) in order to adjust the amount of the proportion of medium (4) removed through the bypass as substream (2, 3).

10. Process according to Claim 1, **characterized in that** the process is performed in a plant comprising at least one absorption device for absorption of nitrous gas in water.

11. Apparatus for operating the process according to Claim 1, comprising at least one air compressor, at least one multistage residual gas turbine (1) and at least one chimney (5), and at least one bypass line arranged in the multistage residual gas turbine (1) for withdrawal of at least one substream (3) of the medium (4) which flows through the residual gas turbine (1) between two or more residual gas turbine stages and for introduction of the substream (3) into the chimney (5).

12. Apparatus according to Claim 11, **characterized in that** at least one bypass line is provided which is arranged upstream of the multistage residual gas turbine (1) and serves for withdrawal of at least one substream (2) of the medium (4a) supplied to the multistage residual gas turbine (1) and for introduction of the substream (2, 3) into the chimney (5) .

13. Apparatus according to one of Claims 11 and 12, **characterized in that** at least one withdrawal device (6) is provided in the bypass line and can be used to adjust the amount of the substream (2, 3).

## Revendications

1. Procédé pour préparer de l'acide nitrique à partir d'ammoniac et de gaz contenant de l'oxygène selon le procédé à une ou à double pression, dans lequel l'oxydation de l'ammoniac utilisé est réalisée sur un catalyseur au moyen d'air de procédé comprimé, qui a été comprimé dans au moins un compresseur, et les vapeurs nitreuses formées par l'oxydation sont absorbées au moins partiellement par de l'eau, suite à quoi de l'acide nitrique se forme et le gaz résiduel non absorbé est expansé dans au moins une turbine à gaz résiduel (1) à étages multiples en vue de la production de travail de compression, **caractérisé en ce qu'**au moins pendant le démarrage et/ou l'arrêt de l'installation d'acide nitrique, un flux partiel (3) du milieu (4) s'écoulant à travers la turbine à gaz résiduel (1) à étages multiples est prélevé dans la turbine à gaz résiduel (1) à étages multiples et le milieu prélevé est guidé dans une cheminée (5), le prélèvement du flux partiel (3) ayant lieu entre deux étages ou plus de la turbine à gaz résiduel.

2. Procédé selon la revendication 1, **caractérisé en ce qu'**un flux partiel (2) du milieu (4a) introduit dans la turbine à gaz résiduel (1) à étages multiples est prélevé en amont de la turbine à gaz résiduel (1) à étages multiples et **en ce que** le milieu prélevé est guidé dans une cheminée (5).

3. Procédé selon la revendication 1, **caractérisé en ce qu'**un flux partiel (3) du milieu (4) s'écoulant à travers la turbine à gaz résiduel (1) à étages multiples est prélevé de celle-ci et est introduit dans la cheminée (5) sur le côté sortie de la turbine à gaz résiduel (1).

4. Procédé selon la revendication 1, **caractérisé en ce qu'**une partie du milieu (4) s'écoulant à travers la turbine à gaz résiduel (1) à étages multiples est déviée en aval de la sortie d'un étage de la turbine en tant que flux partiel (3), en amont de l'étage de turbine suivant, à travers une dérivation et est évacuée dans la cheminée (5) à travers la dérivation.

5. Procédé selon l'une quelconque des revendications 1 à 4, **caractérisé en ce que** la quantité prélevée du flux partiel (2, 3) est régulée par un dispositif de prélèvement (6), de préférence par une vanne manuelle ou de régulation.

6. Procédé selon l'une quelconque des revendications 1 à 5, **caractérisé en ce que** la température du gaz résiduel à la sortie de la turbine à gaz résiduel et/ou dans la cheminée (5) est réglée à une température souhaitée par la quantité prélevée du flux partiel (2, 3).

7. Procédé selon la revendication 1, **caractérisé en ce que** pendant le démarrage et/ou l'arrêt de l'installation d'acide nitrique, un flux partiel (3) du milieu (4) s'écoulant à travers la turbine à gaz résiduel (1) à étages multiples est prélevé dans la turbine à gaz résiduel (1) à étages multiples et **en ce qu'**un flux partiel (2) du milieu (4a) introduit dans la turbine à gaz résiduel (1) est prélevé en amont de la turbine à gaz résiduel (1) et **en ce que** le milieu prélevé est guidé dans une cheminée (5).

8. Procédé selon la revendication 1, **caractérisé en ce que** lors du procédé, une partie du milieu (4a) destiné à l'écoulement à travers la turbine à gaz résiduel (1) à étages multiples est déviée par une dérivation en amont de la turbine à gaz résiduel (1) à étages multiples et est évacuée dans la cheminée (5) à travers la dérivation.

9. Procédé selon l'une quelconque des revendications 1 à 8, **caractérisé en ce que** la température du milieu (4b) quittant la turbine à gaz résiduel (1) à étages multiples sert de grandeur de réglage à un dispositif de prélèvement (6) pour régler la quantité de la proportion du milieu (4) évacuée comme flux partiel (2, 3) à travers la dérivation.

10. Procédé selon la revendication 1, **caractérisé en ce que** le procédé est réalisé dans une installation qui comprend au moins un dispositif d'absorption pour l'absorption de vapeurs nitreuses dans de l'eau.

11. Dispositif pour le fonctionnement du procédé selon la revendication 1, contenant au moins un compresseur à air, au moins une turbine à gaz résiduel (1) à étages multiples et au moins une cheminée (5), ainsi qu'au moins une conduite de dérivation disposée dans la turbine à gaz résiduel (1) à étages multiples pour le prélèvement d'au moins un flux partiel (3) du milieu (4) s'écoulant à travers la turbine à gaz résiduel (1) entre deux étages ou plus de la turbine à gaz résiduel et pour l'introduction du flux partiel (3) dans la cheminée (5).

12. Dispositif selon la revendication 11, **caractérisé en ce qu'**il présente au moins une conduite de dérivation qui est disposée en amont de la turbine à gaz résiduel (1) à étages multiples et qui sert au prélèvement d'au moins un flux partiel (2) du milieu (4a) introduit dans la turbine à gaz résiduel (1) à étages multiples et à l'introduction du flux partiel (2, 3) dans la cheminée (5).

13. Dispositif selon l'une quelconque des revendications 11 à 12, **caractérisé en ce qu'**au moins un dispositif de prélèvement (6), qui permet de régler la quantité du flux partiel (2, 3), est disposé dans la conduite dérivation.
